# EUROPEAN PATENT APPLICATION

(11) **EP 4 567 854 A1**
(43) Date of publication of application: **11.06.2025**
(21) Application number: 24190913.4
(22) Date of filing: 25.07.2024
(51) Int. Cl.: H01H 85/10

(54) **FILM CABLE AND BATTERY MODULE INCLUDING THE SAME**

(30) Priority: 05.12.2023 KR 20230174425
(71) Applicant: SAMSUNG SDI CO., LTD., Giheung-gu Yongin-si, Gyeonggi-do 17084 (KR)
(72) Inventor: Park, Kyung Hoon, 16678 Suwon-si, Gyeonggi-do (KR); Jeong, Hyeong Kyu, 16678 Suwon-si, Gyeonggi-do (KR)
(74) Representative: Gulde & Partner

(57) **Abstract**

The present disclosure relates to a film cable including a conductor wire, and an overcurrent blocking unit provided on the conductor wire and configured to block an overcurrent flowing through the conductor wire by reducing an allowable current of the conductor wire. The present disclosure further relates to a battery module comprising the film cable according to the invention.

## Description

### BACKGROUND

### 1. Field

The present disclosure relates to a film cable and a battery module including the same.

### 2. Discussion of Related Art

A secondary battery is a battery that can be charged and discharged, unlike a primary battery that cannot be recharged. Low-capacity secondary batteries are used in small portable electronic devices such as smartphones, feature phones, notebook computers, digital cameras, and camcorders, and high-capacity secondary batteries are widely used as power storage batteries and power sources for driving motors in hybrid and electric vehicles. Such a secondary battery includes an electrode assembly with a positive electrode and a negative electrode, a case for accommodating the electrode assembly, electrode terminals connected to the electrode assembly, and the like.

The information described in the background of the present disclosure is merely disclosed for helping to understand the background of the present disclosure, and therefore it may contain information that does not constitute the related art.

### SUMMARY

The invention is defined by the appended claims. The description that follows is subjected to this limitation. Any disclosure lying outside the scope of said claims is only intended for illustrative as well as comparative purposes.

One or more embodiments include a film cable which may function as a fuse to block overcurrent, and a battery module including the same.

These and other aspects and characteristics of embodiments according to of the present disclosure will be described in or will be apparent from the following description of some embodiments of the present disclosure.

According to one or more embodiments, a film cable includes a conductor wire, and an overcurrent blocking unit provided on the conductor wire and configured to block an overcurrent flowing through the conductor wire by reducing an allowable current of the conductor wire.

The overcurrent blocking unit may include an overcurrent blocking hole passing through the conductor wire.

The overcurrent blocking hole may pass substantially perpendicular to an extension direction of the conductor wire.

The overcurrent blocking hole may be formed in a circular shape or may be formed in other shapes such as elliptical, triangular, rectangular or diamond-shaped. A suitable combination of different shapes may also be selected. In this way, potential influences on tensile strength can be counteracted at the same time as saving material and improving overcurrent flowing protection. Suitable shapes and combinations thereof can reduce weak points and improve mechanical stability.

A plurality of overcurrent blocking holes may be spaced apart from each other in an extension direction of the conductor wire.

A total area of a plurality of overcurrent blocking holes may be in a range of 36% to 42% of a total area of the conductor wire.

The film cable may further include an insulating member surrounding the conductor wire.

The overcurrent blocking hole may include a hollow portion formed of a hollow, and an edge portion provided along a circumferential portion of the hollow portion. In other words, the overcurrent blocking hole may include a hollow portion formed of a cavity and an edge portion provided along a peripheral portion of the hollow portion.

The hollow portion may have a circular cross-section or a cross-section of the hollow portion may have other shapes such as elliptical, triangular, rectangular or diamond-shaped.

A radius of the hollow portion may be in a range of 0.07 to 0.09 mm.

A distance between a center point of the hollow portion and a center point of an adjacent hollow portion may be in a range of 0.1 to 0.3 mm.

An arrangement of the plurality of overcurrent blocking holes may be equidistant or may be at different distances from each other.

The edge portion may include a pair of first edge portions spaced apart from each other in a first direction, and a pair of second edge portions spaced apart from each other in a second direction intersecting the first direction and connected to the pair of first edge portions.

A length of the first edge portion may be greater than a length of the second edge portion.

The edge portion may further include connecting portions connecting the pair of first edge portions to the pair of second edge portions and formed to be rounded.

A distance between the second edge portion and the adjacent second edge portion may be in a range of 0.04 mm to 0.06 mm.

The film cable may further include a potting resin filled in the overcurrent blocking hole or in at least one overcurrent blocking hole of the plurality of overcurrent blocking holes.

A ratio of a volume of the overcurrent blocking hole or of at least one overcurrent blocking hole of the plurality of overcurrent blocking holes to a volume of the potting resin filled in the overcurrent blocking hole or in the at least one overcurrent blocking hole of the plurality of overcurrent blocking holes may have a range of 1:3 to 1:5.

The potting resin may include a first potting resin filled in the overcurrent blocking hole or in at least one overcurrent blocking hole of the plurality of overcurrent blocking holes, and a second potting resin covering the overcurrent blocking hole or the at least one overcurrent blocking hole of the plurality of overcurrent blocking holes and the conductor wire without being filled in the overcurrent blocking hole or in the at least one overcurrent blocking hole of the plurality of overcurrent blocking holes anymore when the ratio of the volume of the overcurrent blocking hole or of the at least one overcurrent blocking hole of the plurality of overcurrent blocking holes to the volume of the first potting resin filled in the overcurrent blocking hole or in the at least one overcurrent blocking hole of the plurality of overcurrent blocking holes exceeds 1:1. In other words, the second potting resin may be applied to a surface of the conductor wire or the overcurrent blocking hole or the at least one overcurrent blocking hole of the plurality of overcurrent blocking holes is unfilled with respect to the second potting resin.

According to one or more embodiments, a battery module according includes a housing, a plurality of battery cells in the housing, preferably accommodated in the housing, and the film cable in the housing, preferably accommodated in the housing, and seated on the plurality of battery cells.

The film cable may extend substantially along a stacking direction of the battery cells.

According to one or more embodiments of the present disclosure, by reducing an allowable current of a conductor wire by a plurality of overcurrent blocking holes spaced apart from each other in an extension direction of the conductor wire and formed in a range of about 36 to 42% of a total area of the conductor wire, it is possible to block an overcurrent flowing through the conductor wire and save a manufacturing cost of a film cable.

In accordance with one or more embodiments of the present disclosure, by increasing a strength of the conductor wire by a potting resin filled in the overcurrent blocking hole, it may be possible to respond to vibration or an external impact.

However, the effects obtainable by the present disclosure are not limited to the above-mentioned effects, and other technical effects not mentioned will be clearly understood by those skilled in the art from the following description of the present disclosure.

### BRIEF DESCRIPTION OF THE DRAWINGS

The accompanying drawings in the present specification show embodiments of the present disclosure, and are illustrated to help further understand the technical concept, aspects and features of the present disclosure together with the detailed description of the present disclosure. Therefore, the present disclosure shall not be interpreted as being defined only by the aspects illustrated in the drawings.
FIG. 1 is an exploded perspective view schematically illustrating a battery module according to embodiments of the present disclosure;
FIG. 2 is a perspective view schematically illustrating a battery cell according to embodiments of the present disclosure;
FIG. 3 is a cross-sectional view schematically illustrating the battery cell according to embodiments of the present disclosure;
FIG. 4 is a plan view schematically illustrating a film cable according to embodiments of the present disclosure;
FIG. 5 is a cross-sectional view along a line V-V in FIG. 4;
FIG. 6 is a perspective view schematically illustrating a film cable according to embodiments of the present disclosure;
FIG. 7 is a cross-sectional view along a line VII-VII in FIG. 6;
FIG. 8 is a plan view schematically illustrating a film cable according to embodiments of the present disclosure;
FIG. 9 is a perspective view schematically illustrating a film cable according to embodiments of the present disclosure;
FIG. 10 is a cross-sectional view along a line X-X in FIG. 9;
FIG. 11 is a plan view schematically illustrating a film cable according to embodiments of the present disclosure;
FIG. 12 is a perspective view schematically illustrating a film cable according to embodiments of the present disclosure; and
FIG. 13 is a cross-sectional view along a line XIII-XIII in FIG. 12.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

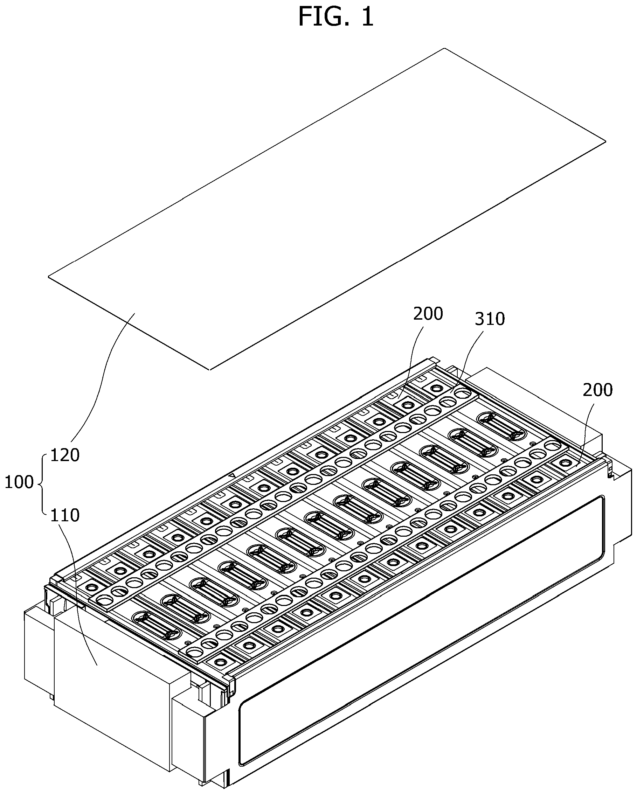

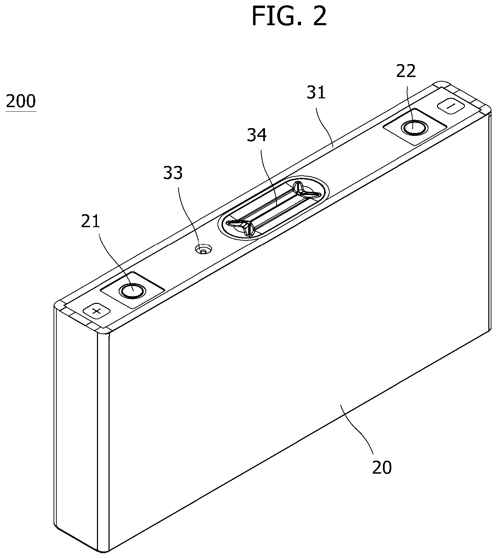

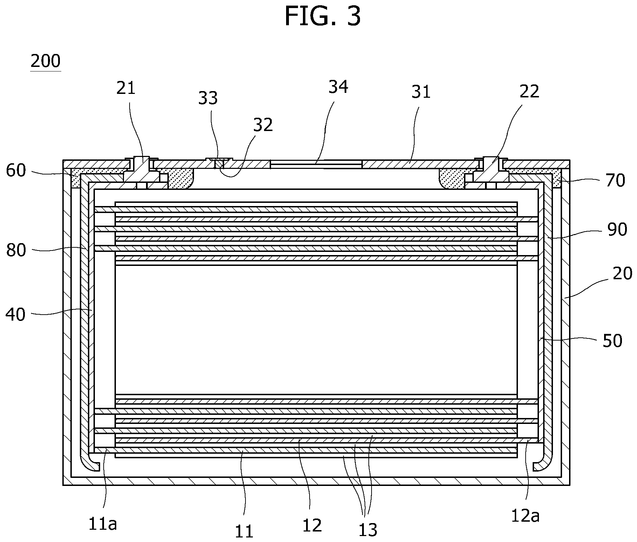

FIG. 1 is an exploded perspective view schematically illustrating a battery module according to embodiments of the present disclosure, FIG. 2 is a perspective view schematically illustrating a battery cell according to embodiments of the present disclosure, and FIG. 3 is a cross-sectional view schematically illustrating the battery cell according to embodiments of the present disclosure.

Referring to FIGS. 1 to 3, a battery module according to embodiments of the present disclosure includes a housing 100, a battery cell 200, and a film cable 310.

The housing 100 may form a schematic exterior of the battery module and function as a configuration which entirely supports the battery cell 200 and the film cable 310. The housing 100 may include a housing body 110 and a housing cover 120.

The housing body 110 may be formed to have a box shape with a hollow therein and an open top. A cross-sectional shape of the housing body 110 may be changed to various shapes other than a quadrangular shape as illustrated in FIG. 1.

The housing cover 120 may open and close an internal space of the housing body 110. The housing cover 120 may be formed to have a plate or planar shape, or, in other words, a substantially plate shape and may be arranged to face an open top surface, opening or recess of the housing body 110. The housing cover 120 may be detachably coupled to the housing body 110 by various coupling methods such as screwing, mounting, bolting and fitting.

The battery cell 200 may include at least one electrode assembly 10 wound with a separator 13, which is an insulator, interposed between a positive electrode 11 and a negative electrode 12, a case 20 in which the electrode assembly 10 is embedded, and a cap assembly 30 coupled to an opening of the case 20.

For the battery cell 200, a lithium-ion secondary battery with a prismatic shape will be described as an example. However, the present disclosure is not limited thereto, and the battery cell 200 may be a lithium polymer battery or cylindrical battery.

The positive electrode 11 and the negative electrode 12 may include a coated part, which is an area in which an active material is coated on a current collector formed of a thin metal foil, and non-coated parts 11a and 12a, which are areas coating-free or, in other words, not coated with the active material.

The positive electrode 11 and the negative electrode 12 may be wound with the separator 13, which is an insulator, interposed therebetween. However, embodiments according to the present disclosure are not limited thereto, and the electrode assembly 10 may have a structure in which the positive and negative electrodes formed of a plurality of sheets are alternately stacked with the separator interposed therebetween.

The case 20 may form the overall exterior of the battery cell 200 and may be made of a conductive metal such as aluminum, an aluminum alloy, or nickel-plated steel. In addition, the case 20 may provide a space in which the electrode assembly 10 is accommodated.

The cap assembly 30 may include a cap plate 31 which covers the opening of the case 20, and the case 20 and the cap plate 31 may be made of a conductive material. Here, the positive electrode and negative electrode terminals 21 and 22, which are electrically connected to the positive electrode 11 or the negative electrode 12, may be attached in such a way that they protrude outwards through the cap plate 31.

In addition, outer circumferential surfaces of upper pillars of the positive electrode and negative electrode terminals 21 and 22 protruding outwards from the cap plate 31 may be threaded and fixed or secured to the cap plate 31 with nuts.

However, embodiments according to the present disclosure are not limited thereto, and the positive electrode and negative electrode terminals 21 and 22 may be formed in a rivet structure and rivet-coupled, or coupled by being welded to the cap plate 31.

In addition, the cap plate 31 may be formed of a thin plate and coupled to the opening of the case 20, an electrolyte injection port 32 into which a sealing stopper 33 may be installed or inserted may be formed in the cap plate 31, and a vent 34 on which a notch is formed may be installed.

The vent 34 may be opened or closed in response to a change in internal pressure of the case 20. In other words, the vent 34 may maintain a closed state to seal the case 20 during normal operation of the electrode assembly 10. The vent 34 may be opened as the internal pressure of the case 20 increases to a set magnitude or higher due to overcharging, a fire, or the like and may discharge emissions such as flame and gas from the inside of the case 20 to the outside of the case 20.

The positive electrode and negative electrode terminals 21 and 22 may be electrically connected to the current collector including first and second current collectors 40 and 50 (hereinafter referred to as "positive and negative current collectors") connected or bonded to the positive non-coated part 11a or the negative non-coated part 12a, for example by welding.

For example, the positive electrode and negative electrode terminals 21 and 22 may be coupled to the positive electrode and negative electrode current collectors 40 and 50 by welding. However, embodiments according to the present disclosure are not limited thereto, and the positive electrode and negative electrode terminals 21 and 22 and the positive electrode and negative electrode current collectors 40 and 50 may be formed by being coupled integrally.

In addition, an insulating member may be installed between the electrode assembly 10 and the cap plate 31. Here, the insulating member may include first and/or second lower insulating members 60 and 70, and each of the first and/or second lower insulating members 60 and 70 may be installed between the electrode assembly 10 and the cap plate 31.

In addition, according to embodiments, one end of a separation member, which may be installed to face one side surface of the electrode assembly 10, may be installed between the insulating member and the positive electrode or negative electrode terminal 21 or 22. The separation member may include first and/or second separation members 80 and 90.

Therefore, first ends of the first and/or second separation members 80 and 90, which may be installed to face either side surface of the electrode assembly 10, respectively, may be installed between the first and second lower insulating members 60 and/or 70 and the positive electrode and negative electrode terminals 21 and 22.

As a result, the positive electrode and negative electrode terminals 21 and 22 coupled by being welded to the positive electrode and negative electrode current collectors 40 and 50 may be coupled to first ends of the first and second lower insulating members 60 and 70 and the first and/or second separation members 80 and 90.

A plurality of battery cells 200 may be provided. The plurality of battery cells 200 may be located inside the housing 100. The plurality of battery cells 200 may be arranged inside the housing 100. The number of battery cells 200 is not limited to that illustrated in FIG. 1, and may be changed in design in various ways depending on the size or the like of the battery module.

The film cable 310 is accommodated inside the housing. The film cable 310 is seated on the plurality of battery cells 200 and may extend substantially along a stacking direction of the battery cells 200. The film cable 310 may be a flexible flat cable (FFC) and may be used to measure voltages, temperatures, and the like of the plurality of battery cells 200 and transmit the measured voltages, temperatures, and the like to a battery management system (BMS). The film cable 310 according to the present disclosure can block an overcurrent by performing a fuse function in order to prevent or reduce the overcurrent from flowing to a load or BMS when power is supplied and/or a signal is transmitted.

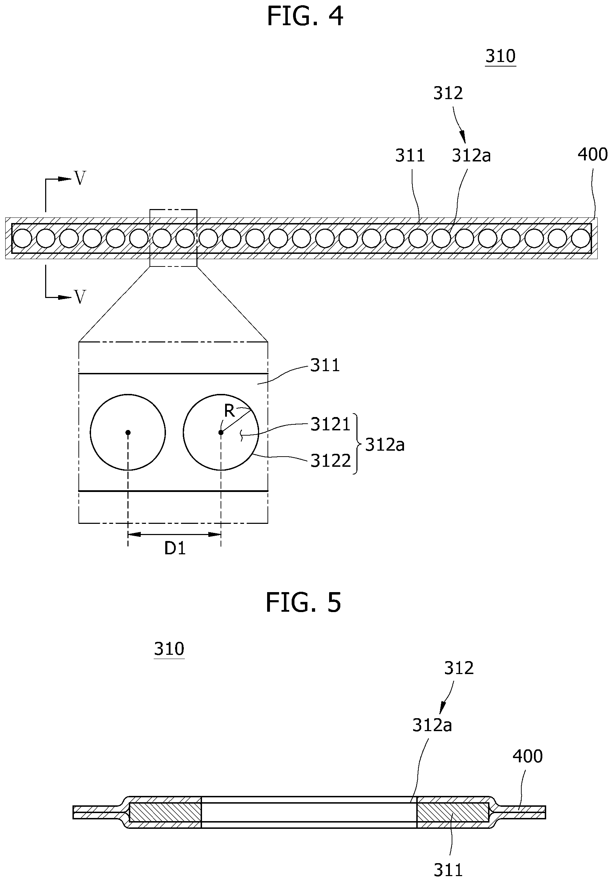

FIG. 4 is a plan view schematically illustrating a film cable according to first embodiments of the present disclosure, and FIG. 5 is a cross-sectional view along a line V-V in FIG. 4.

Referring to FIGS. 4 and 5, the film cable 310 according to the first embodiments of the present disclosure includes a conductor wire 311 and an overcurrent blocking unit 312.

The conductor wire 311 may include a conductive metal material such as copper or silver. The conductor wire 311 may be formed in a plate shape or planar shape and formed to have a set length.

The overcurrent blocking unit 312 is provided on the conductor wire 311. The overcurrent blocking unit 312 blocks the overcurrent flowing through the conductor wire 311 by reducing an allowable current of the conductor wire 311. The overcurrent blocking unit 312 may cause the conductor wire 311 to be melted and cut when a current exceeding a set current value flows through the conductor wire 311.

The overcurrent blocking unit 312 may include an overcurrent blocking hole 312a passing through the conductor wire 311. The overcurrent blocking hole 312a may be formed through the conductor wire 311 in a thickness direction, or, in other words, perpendicular to an extension direction of the conductor wire 311. A plurality of overcurrent blocking holes 312a may be provided. The plurality of overcurrent blocking holes 312a may be arranged to be spaced apart from each other in an extension direction of the conductor wire 311. The arrangement may be equidistant or at different distances from each other.

The overcurrent blocking hole 312a may be formed in a circular shape. Other shapes such as elliptical, triangular, rectangular or diamond-shaped may be also possible. The overcurrent blocking hole 312a may include a hollow portion 3121 and an edge portion 3122.

The hollow portion 3121 may be formed in a hollow shape. The edge portion 3122 may be formed by drawing an arc along a circumference of the hollow portion 3121.

When a length of the conductor wire 311 is about 5 mm and a width is about 0.25 mm, a radius R of the hollow portion 3121 may be in a range of about 0.07 to about 0.09 mm. A distance D1 between a center point of the hollow portion 3121 and a center point of the adjacent hollow portion 3121 may be in a range of about 0.1 to about 0.3 mm.

A total area of the plurality of overcurrent blocking holes 312a may be in a range of about 36 to about 42% of a total area of the conductor wire 311. For example, when the total area of the plurality of overcurrent blocking holes 312a is less than about 36% of the total area of the conductor wire 311, a current of about 1 A may flow through the conductor wire 311 for about 4 hours or more, a current of about 3 A may flow through the conductor wire 311 for more than about 5 seconds, and a current of about 4 A may flow through the conductor wire 311 for more than 1 second.

When the total area of the plurality of overcurrent blocking holes 312a exceeds about 42% of the total area of the conductor wire 311, a current of about 1 A may flow through the conductor wire 311 for less than about 4 hours, a current of about 3 A may flow through the conductor wire 311 for about 5 seconds or less, and a current of about 4 A may flow through the conductor wire 311 for 1 second or less.

The film cable 310 according to embodiments of the present disclosure may further include an insulating member 400. The insulating member 400 may be provided to surround the conductor wire 311. The insulating member 400 may serve to protect the conductor wire 311 by covering the conductor wire 311.

The insulating member 400 may be provided with a plurality of openings each communicating with each of the plurality of overcurrent blocking holes 312a. Each of the plurality of openings may be arranged to face each of the plurality of overcurrent blocking holes 312a.

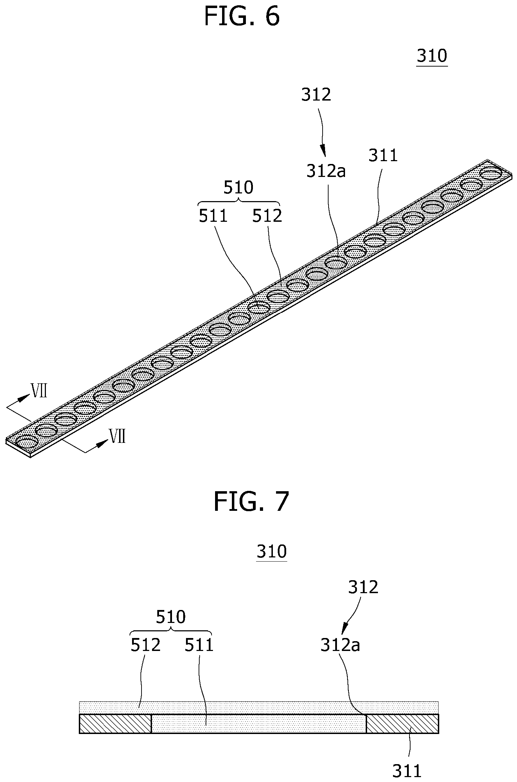

FIG. 6 is a perspective view schematically illustrating a film cable according to second embodiments of the present disclosure, and FIG. 7 is a cross-sectional view along a line VII-VII in FIG. 6.

Referring to FIGS. 6 and 7, the film cable 310 according to the second embodiments of the present disclosure includes the conductor wire 311, the overcurrent blocking unit 312, and may include a potting resin 510.

In describing the film cable 310 according to the second embodiments of the present disclosure, only the potting resin 510, which is not described in the film cable 310 according to the first embodiments of the present disclosure, will be described in more detail.

The description of the film cable 310 according to the first embodiments of the present disclosure can be applied to the remaining components of the film cable 310 according to the second embodiments of the present disclosure.

The potting resin 510 may be filled in the overcurrent blocking hole 312a. The potting resin 510 may serve to protect the conductor wire 311 from an external impact. The potting resin 510 may include a silicone material.

A ratio of a volume of the overcurrent blocking hole 312a to a volume of the potting resin 510 filled in the overcurrent blocking hole 312a may be in a range of about 1:3 to about 1:5. For example, when the ratio of the volume of the overcurrent blocking hole 312a to the volume of the potting resin 510 filled in the overcurrent blocking hole 312a is about 1:3 or more, the conductor wire 311 may have a sufficient tensile strength of about 15 N or more, and when the ratio of the volume of the overcurrent blocking hole 312a to the volume of the potting resin 510 filled in the overcurrent blocking hole 312a is about 1:1, the conductor wire 311 may have a reduced tensile strength of less than about 15 N.

The potting resin 510 may include a first potting resin 511 and a second potting resin 512.

The first potting resin 511 is filled in the overcurrent blocking hole 312a. In other words, the first potting resin 511 is filled in the overcurrent blocking hole 312a at a ratio of about 1:1 of the volume of the overcurrent blocking hole 312a.

When the ratio of the volume of the overcurrent blocking hole 312a to the volume of the first potting resin 511 filled in the overcurrent blocking hole 312a exceeds about 1:1, the second potting resin 512 may cover the overcurrent blocking hole 312a and the conductor wire 311 without being filled in the overcurrent blocking hole 312a anymore. In other words, the second potting resin 512 may be applied to a surface of the conductor wire 311 or the overcurrent blocking hole 312a is unfilled with respect to the second potting resin 512.

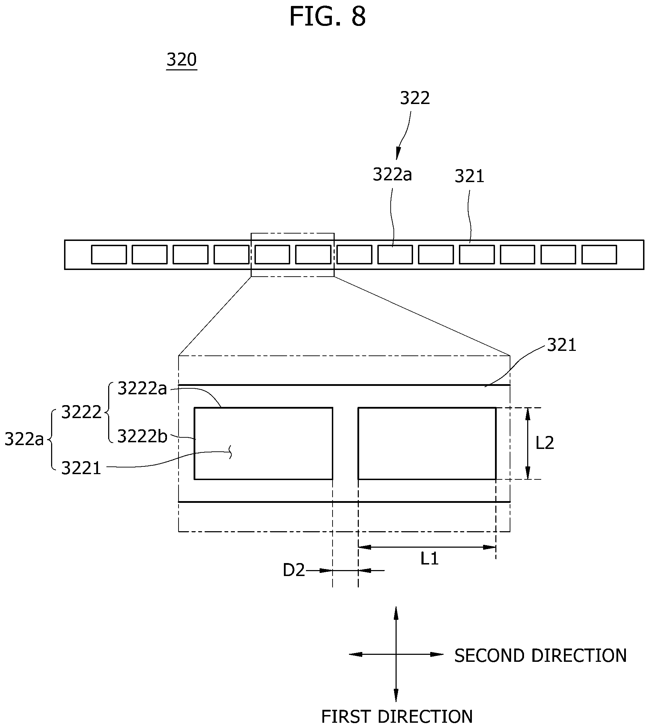

FIG. 8 is a plan view schematically illustrating a film cable according to third embodiments of the present disclosure. Referring to FIG. 8, a film cable 320 according to the third embodiments of the present disclosure may include a conductor wire 321 and an overcurrent blocking unit 322.

The conductor wire 321 may include a conductive metal material such as copper or silver. The conductor wire 321 may be formed in a plate shape and formed to have a set length.

The overcurrent blocking unit 322 is provided on the conductor wire 321. The overcurrent blocking unit 322 blocks the overcurrent flowing through the conductor wire 321 by reducing an allowable current of the conductor wire 321. The overcurrent blocking unit 322 may cause the conductor wire 321 to be melted and cut when a current exceeding a set current value flows through the conductor wire 321.

The overcurrent blocking unit 322 may include an overcurrent blocking hole 322a passing through the conductor wire 321. The overcurrent blocking hole 322a may be formed through the conductor wire 321 in a thickness direction, or, in other words, perpendicular to an extension direction of the conductor wire 321. A plurality of overcurrent blocking holes 322a may be provided. The plurality of overcurrent blocking holes 322a may be arranged to be spaced apart from each other in an extension direction of the conductor wire 321. The arrangement may be equidistant or at different distances from each other.

The overcurrent blocking hole 322a may be formed in a rectangular shape. The overcurrent blocking hole 322a may include a hollow portion 3221 and an edge portion 3222. The hollow portion 3221 may be formed in a hollow shape.

The edge portion 3222 may be provided along a circumferential portion of the hollow portion 3221. The edge portion 3222 may include a first edge portion 3222a and a second edge portion 3222b.

A pair of first edge portions 3222a may be provided and arranged to be spaced apart from each other in a first direction. Here, the first direction may be a width direction of the conductor wire 321. The pair of first edge portions 3222a may be linearly arranged side by side.

A pair of second edge portions 3222b may be provided and arranged to be spaced apart from each other in a second direction intersecting the first direction. Here, the second direction may be an extension direction of the conductor wire 321. The pair of second edge portions 3222b may be linearly arranged side by side.

The pair of second edge portions 3222b may be connected to the pair of first edge portions 3222a, respectively. A length L1 of the first edge portion 3222a may be formed to be more than a length L2 of the second edge portion. Therefore, the overcurrent blocking hole 322a may be formed in a rectangular shape with angled corners.

When the length of the conductor wire 321 is about 5 mm, the width is about 0.25 mm, and the length of the first edge portion 3222a may be about 0.3 mm, and when the length of the second edge portion 3222b is about 0.15 mm, a distance D2 between the second edge portion 3222b and the adjacent second edge portion 3222b may be in a range of about 0.04 to about 0.06 mm.

A total area of the plurality of overcurrent blocking holes 322a may be in a range of about 36 to about 41% of a total area of the conductor wire 321. For example, when the total area of the plurality of overcurrent blocking holes 322a is less than about 36% of the total area of the conductor wire 321, a current of about 1 A may flow through the conductor wire 321 for about 4 hours or more, a current of about 3 A may flow through the conductor wire 321 for more than about 5 seconds, and a current of about 4 A may flow through the conductor wire 321 for more than 1 second.

When the total area of the plurality of overcurrent blocking holes 322a exceeds about 41% of the total area of the conductor wire 321, a current of about 1 A may flow through the conductor wire 321 for less than about 4 hours, a current of about 3 A may flow through the conductor wire 321 for about 5 seconds or less, and a current of about 4 A may flow through the conductor wire 321 for 1 second or less.

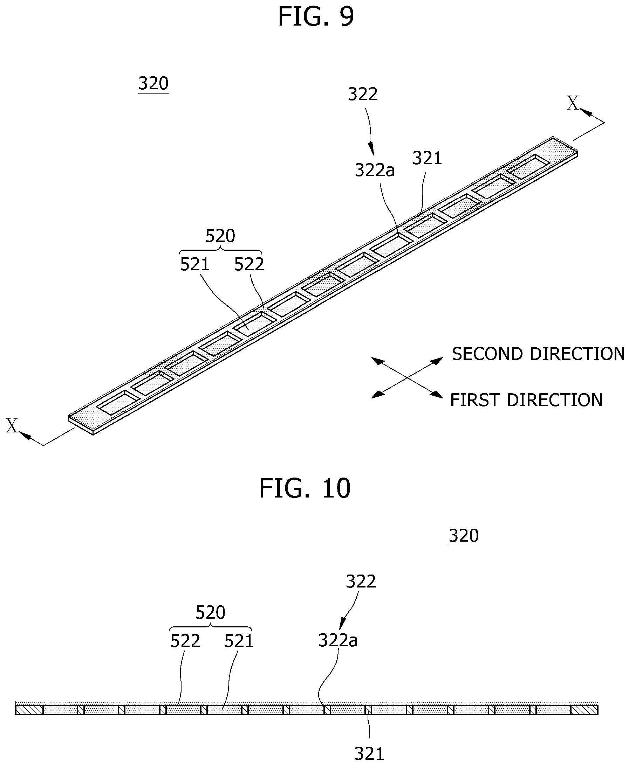

FIG. 9 is a perspective view schematically illustrating a film cable according to fourth embodiments of the present disclosure, and FIG. 10 is a cross-sectional view along a line X-X in FIG. 9.

Referring to FIGS. 9 and 10, the film cable 320 according to the fourth embodiments of the present disclosure includes a conductor wire 321, an overcurrent blocking unit 322, and may include a potting resin 520.

In describing the film cable 320 according to the fourth embodiments of the present disclosure, only the potting resin 520, which is not described in the film cable 320 according to the third embodiment of the present disclosure, will be described.

The description of the film cable 320 according to the third embodiments of the present disclosure can be applied to the remaining components of the film cable 320 according to the fourth embodiment of the present disclosure.

The potting resin 520 may be filled in the overcurrent blocking hole 322a. The potting resin 520 may serve to protect the conductor wire 321 from an external impact. The potting resin 520 may include a silicone material.

A ratio of a volume of the overcurrent blocking hole 322a to a volume of the potting resin 520 filled in the overcurrent blocking hole 322a may be in a range of about 1:3 to about 1:5. For example, when the ratio of the volume of the overcurrent blocking hole 322a to the volume of the potting resin 520 filled in the overcurrent blocking hole 322a is about 1:3 or more, the conductor wire 321 may have a sufficient tensile strength of about 15 N or more, and when the ratio of the volume of the overcurrent blocking hole 322a to the volume of the potting resin 520 filled in the overcurrent blocking hole 322a is about 1:1, the conductor wire 321 may have a reduced tensile strength of less than about 15 N.

The potting resin 520 may include a first potting resin 521 and a second potting resin 522.

The first potting resin 521 is filled in the overcurrent blocking hole 322a. In other words, the first potting resin 521 is filled in the overcurrent blocking hole 322a at a ratio of about 1:1 of the volume of the overcurrent blocking hole 322a.

When the ratio of the volume of the overcurrent blocking hole 322a to the volume of the first potting resin 521 filled in the overcurrent blocking hole 322a exceeds about 1:1, the second potting resin 522 may cover the overcurrent blocking hole 322a and the conductor wire 321 without being filled in the overcurrent blocking hole 322a anymore. In other words, the second potting resin 522 may be applied to a surface of the conductor wire 321 or the overcurrent blocking hole 322a is unfilled with respect to the second potting resin 522.

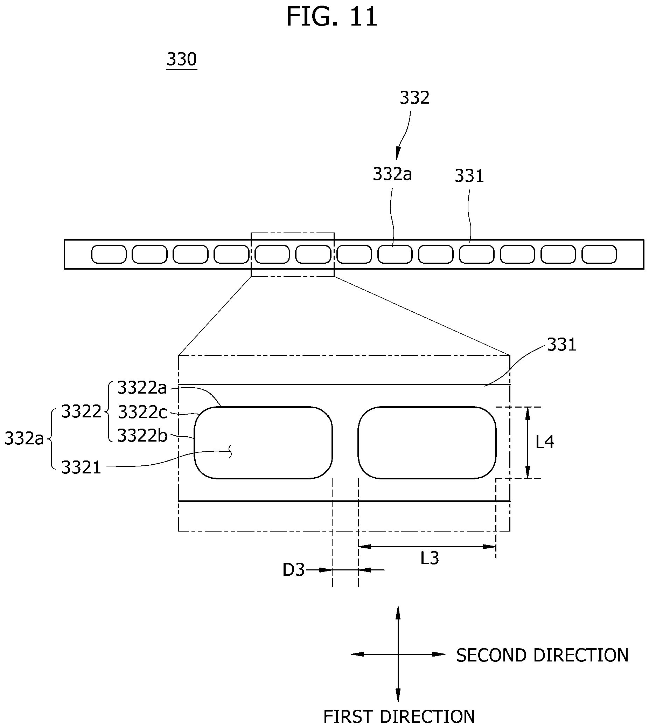

FIG. 11 is a plan view schematically illustrating a film cable according to fifth embodiments of the present disclosure. Referring to FIG. 11, a film cable 330 according to the fifth embodiments of the present disclosure may include a conductor wire 331 and an overcurrent blocking unit 332.

The conductor wire 331 may include a conductive metal material such as copper or silver. The conductor wire 331 may be formed in a plate shape and formed to have a set length.

The overcurrent blocking unit 332 is provided on the conductor wire 331. The overcurrent blocking unit 332 blocks the overcurrent flowing through the conductor wire 331 by reducing an allowable current of the conductor wire 331. The overcurrent blocking unit 332 may cause the conductor wire 331 to be melted and cut when a current exceeding a set current value flows through the conductor wire 331.

The overcurrent blocking unit 332 may include an overcurrent blocking hole 332a passing through the conductor wire 331. The overcurrent blocking hole 332a may be formed through the conductor wire 331 in a thickness direction, or, in other words, perpendicular to an extension direction of the conductor wire 331. A plurality of overcurrent blocking holes 332a may be provided. The plurality of overcurrent blocking holes 332a may be arranged to be spaced apart from each other in an extension direction of the conductor wire 331. The arrangement may be equidistant or at different distances from each other.

The overcurrent blocking hole 332a may be formed in a rectangular shape with each corner rounded. The overcurrent blocking hole 332a may include a hollow portion 3321 and an edge portion 3322. The hollow portion 3321 may be formed in a hollow shape.

The edge portion 3322 may be provided along a circumferential portion of the hollow portion 3321. The edge portion 3322 may include a first edge portion 3322a, a second edge portion 3322b, and a connecting portion 3322c.

A pair of first edge portions 3322a may be provided and arranged to be spaced apart from each other in a first direction. Here, the first direction may be a width direction of the conductor wire 331. The pair of first edge portions 3322a may be linearly arranged side by side.

A pair of second edge portions 3322b may be provided and arranged to be spaced apart from each other in a second direction intersecting the first direction. Here, the second direction may be an extension direction of the conductor wire 331. The pair of second edge portions 3322b may be linearly arranged side by side. The pair of second edge portions 3322b may be connected to the pair of first edge portions 3322a, respectively.

The connecting portions 3322c may connect the pair of first edge portions 3322a to the pair of second edge portions 3322b. The connecting portions 3322c may be located at each corner of the edge portion 3322 to connect the first edge portions 3322a to the second edge portions 3322b. The connecting portions 3322c may be formed to be rounded.

A length L3 of the first edge portion 3322a may be formed to be more than a length L4 of the second edge portion 3322b. Therefore, the overcurrent blocking hole 332a may be formed in a rectangular shape with each corner rounded.

When the length of the conductor wire 331 is about 5 mm, the width is about 0.25 mm, and the length of the first edge portion 3322a may be about 0.3 mm, and when the length of the second edge portion 3322b is about 0.15 mm, a distance D3 between the second edge portion 3322b and the adjacent second edge portion 3322b may be in a range of about 0.04 to about 0.06 mm.

A total area of the plurality of overcurrent blocking holes 332a may be in a range of about 37 to about 41% of a total area of the conductor wire 331. For example, when the total area of the plurality of overcurrent blocking holes 332a is less than about 37% of the total area of the conductor wire 331, a current of about 1 A may flow through the conductor wire 331 for about 4 hours or more, a current of about 3 A may flow through the conductor wire 331 for more than about 5 seconds, and a current of about 4 A may flow through the conductor wire 331 for more than 1 second.

When the total area of the plurality of overcurrent blocking holes 332a exceeds about 41% of the total area of the conductor wire 331, a current of about 1 A may flow through the conductor wire 331 for less than about 4 hours, a current of about 3 A may flow through the conductor wire 331 for about 5 seconds or less, and a current of about 4 A may flow through the conductor wire 331 for 1 second or less.

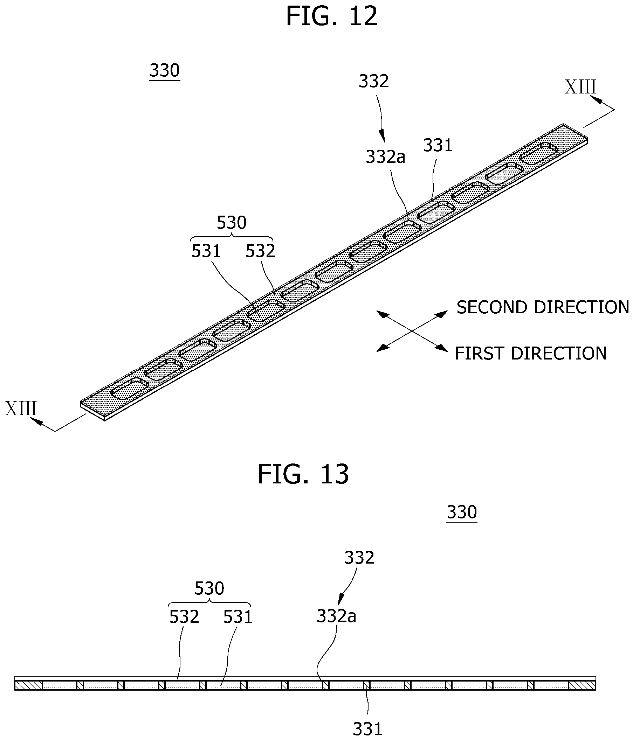

FIG. 12 is a perspective view schematically illustrating a film cable according to sixth embodiments of the present disclosure, and FIG. 13 is a cross-sectional view along line XIII-XIII in FIG. 12.

Referring to FIGS. 12 and 13, the film cable according to the sixth embodiments of the present disclosure includes a conductor wire 331, an overcurrent blocking unit 332, and may include a potting resin 530.

In describing the film cable 330 according to the sixth embodiments of the present disclosure, only the potting resin 530, which is not described in the film cable 330 according to the fifth embodiments of the present disclosure, will be described.

The description of the film cable 330 according to the fifth embodiments of the present disclosure can be applied to the remaining components of the film cable 330 according to the sixth embodiments of the present disclosure.

The potting resin 530 may be filled in the overcurrent blocking hole 332a. The potting resin 530 may serve to protect the conductor wire 331 from an external impact. The potting resin 530 may include a silicone material.

A ratio of a volume of the overcurrent blocking hole 332a to a volume of the potting resin 530 filled in the overcurrent blocking hole 332a may be in a range of about 1:3 to about 1:5. For example, when the ratio of the volume of the overcurrent blocking hole 332a to the volume of the potting resin 530 filled in the overcurrent blocking hole 332a is about 1:3 or more, the conductor wire 331 may have a sufficient tensile strength of about 15 N or more, and when the ratio of the volume of the overcurrent blocking hole 332a to the volume of the potting resin 530 filled in the overcurrent blocking hole 332a is about 1:1, the conductor wire 331 may have a low tensile strength of less than about 15 N.

The potting resin 530 may include a first potting resin 531 and a second potting resin 532.

The first potting resin 531 is filled in the overcurrent blocking hole 332a. In other words, the first potting resin 531 is filled in the overcurrent blocking hole 332a at a ratio of about 1:1 of the volume of the overcurrent blocking hole 332a.

When the ratio of the volume of the overcurrent blocking hole 332a to the volume of the first potting resin 531 filled in the overcurrent blocking hole 332a exceeds about 1:1, the second potting resin 532 may cover the overcurrent blocking hole 332a and the conductor wire 331 without being filled in the overcurrent blocking hole 332a anymore. In other words, the second potting resin 532 may be applied to a surface of the conductor wire 331 or the overcurrent blocking hole 332a is unfilled with respect to the second potting resin 532.

While aspects of some embodiments of the present disclosure have been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims, and their equivalents.

## Claims

1. A film cable (310, 320, 330) comprising:
a conductor wire (311, 321, 331); and
an overcurrent blocking unit (312, 322, 332) provided on the conductor wire (311, 321, 331) and configured to block an overcurrent flowing through the conductor wire (311, 321, 331) by reducing an allowable current of the conductor wire (311, 321, 331).

2. The film cable (310, 320, 330) as claimed in claim 1, wherein the overcurrent blocking unit (312, 322, 332) comprises an overcurrent blocking hole (312a, 322a, 332a) passing through the conductor wire (311, 321, 331).

3. The film cable (310, 320, 330) as claimed in claim 2, wherein a plurality of overcurrent blocking holes (312a, 322a, 332a) are spaced apart from each other in an extension direction of the conductor wire (311, 321, 331).

4. The film cable (310, 320, 330) as claimed in claim 2 or 3, wherein a total area of a plurality of overcurrent blocking holes (312a, 322a, 332a) is in a range of 36% to 42% of a total area of the conductor wire (311, 321, 331).

5. The film cable (310, 320, 330) as claimed in any of claims 2 to 4, wherein the overcurrent blocking hole (312a, 322a, 332a) or at least one overcurrent blocking hole (312a, 322a, 332a) of the plurality of overcurrent blocking holes (312a, 322a, 332a) comprises:
a hollow portion (3121, 3221, 3321) formed of a hollow; and
an edge portion (3122, 3222, 3322) provided along a circumferential portion of the hollow portion (3121, 3221, 3321).

6. The film cable (310, 320, 330) as claimed in claim 5, wherein a radius of the hollow portion (3121, 3221, 3321) is in a range of 0.07 mm to 0.09 mm.

7. The film cable (310, 320, 330) as claimed in claim 5 or 6, wherein a distance between a center point of the hollow portion (3121, 3221, 3321) and a center point of an adjacent hollow portion (3121, 3221, 3321) is in a range of 0.1 to 0.3 mm.

8. The film cable (310, 320, 330) as claimed in any of claims 5 to 7, wherein the edge portion (3122, 3222, 3322) comprises:
a pair of first edge portions (3222a, 3322a) spaced apart from each other in a first direction; and
a pair of second edge portions (3222b, 3322b) spaced apart from each other in a second direction intersecting the first direction and connected to the pair of first edge portions (3222a, 3322a).

9. The film cable (310, 320, 330) as claimed in claim 8, wherein a length of the first edge portion (3222a, 3322a) is greater than a length of the second edge portion (3222b, 3322b).

10. The film cable (310, 320, 330) as claimed in claim 8 or 9, wherein the edge portion (3122, 3222, 3322) further comprises connecting portions (3322c) connecting the pair of first edge portions (3222a, 3322a) to the pair of second edge portions (3222b, 3322b) and formed to be rounded.

11. The film cable (310, 320, 330) as claimed in any of claims 8 to 10, wherein a distance between the second edge portion (3222b, 3322b) and the adjacent second edge portion (3222b, 3322b) is in a range of 0.04 mm to 0.06 mm.

12. The film cable (310, 320, 330) as claimed in any of claims 2 to 11, further comprising a potting resin (510, 520, 530) filled in the overcurrent blocking hole (312a, 322a, 332a) or in at least one overcurrent blocking hole (312a, 322a, 332a) of the plurality of overcurrent blocking holes (312a, 322a, 332a).

13. The film cable (310, 320, 330) as claimed in claim 12, wherein a ratio of a volume of the overcurrent blocking hole (312a, 322a, 332a) or of at least one overcurrent blocking hole (312a, 322a, 332a) of the plurality of overcurrent blocking holes (312a, 322a, 332a) to a volume of the potting resin (510, 520, 530) filled in the overcurrent blocking hole (312a, 322a, 332a) or in the at least one overcurrent blocking hole (312a, 322a, 332a) has a range of 1:3 to 1:5.

14. The film cable (310, 320, 330) as claimed in claim 12 or 13, wherein the potting resin (510, 520, 530) comprises:
a first potting resin (511, 521, 531) filled in the overcurrent blocking hole (312a, 322a, 332a) or in at least one overcurrent blocking hole (312a, 322a, 332a) of the plurality of overcurrent blocking holes (312a, 322a, 332a); and
a second potting resin (512, 522, 532) covering the overcurrent blocking hole (312a, 322a, 332a) or the at least one overcurrent blocking hole (312a, 322a, 332a) and the conductor wire (311, 321, 331) without being filled in the overcurrent blocking hole (312a, 322a, 332a) or in the at least one overcurrent blocking hole (312a, 322a, 332a) anymore when the ratio of the volume of the overcurrent blocking hole (312a, 322a, 332a) or of the at least one overcurrent blocking hole (312a, 322a, 332a) to the volume of the first potting resin (511, 521, 531) filled in the overcurrent blocking hole (312a, 322a, 332a) or in the at least one overcurrent blocking hole (312a, 322a, 332a) exceeds 1:1.

15. A battery module comprising:
a housing (100);
a plurality of battery cells (200) in the housing (100); and
the film cable (310, 320, 330) as claimed in any of claims 1 to 14 in the housing (100) and seated on the plurality of battery cells (200).
